# EUROPEAN PATENT APPLICATION

(11) **EP 0 947 337 A2**
(43) Date of publication of application: **06.10.1999**
(21) Application number: 99105119.4
(22) Date of filing: 25.03.1999
(51) Int. Cl.: B41J 3/407

(54) **Printing device**

(30) Priority: 31.03.1998 JP 10545698; 31.03.1998 JP 10545798; 31.03.1998 JP 10545898
(71) Applicant: BROTHER KOGYO KABUSHIKI KAISHA, Nagoya-shi, Aichi-ken 467-8561 (JP)
(72) Inventor: Ueno, Hideo, c/o Brother Kogyo K.K., Nagoya-shi, Aichi-ken 467-8561 (JP); Kanda, Kazumi, c/o Brother Kogyo K.K., Nagoya-shi, Aichi-ken 467-8561 (JP); Moriyama, Satoru, c/o Brother Kogyo K.K., Nagoya-shi, Aichi-ken 467-8561 (JP); Kanda, Sachie, c/o Brother Kogyo K.K., Nagoya-shi, Aichi-ken 467-8561 (JP); Bito, Mikako, c/o Brother Kogyo K.K., Nagoya-shi, Aichi-ken 467-8561 (JP); Terai, Mizue, c/o Brother Kogyo K.K., Nagoya-shi, Aichi-ken 467-8561 (JP); Omura, Kengo, c/o Brother Kogyo K.K., Nagoya-shi, Aichi-ken 467-8561 (JP)
(74) Representative: Prüfer, Lutz H., Dipl.-Phys.

(57) **Abstract**

A tape printing device (1) converts a value in a currency into a value in another currency based on a conversion rate of a inputted currency, and immediately prints on a tape (9) the converted value with an appropriate display style. A currency is stored in correspondence with its conversion rate with respect to a standard currency. When a standard currency value is inputted, conversion rate data is retrieved to a currency conversion table in S24. Based on the retrieved conversion rate data, a value in a currency corresponding to the currency rate is calculated in S25. The calculated value is added with a currency symbol, a decimal point, and positional notation symbols in S26 to S28, and printed on a tape by a thermal head.

## Description

The present invention relates to a printing device for printing characters, figures, and the like on a recording medium, such as a tape to be attached to products and the like as a price tag, for example.

A conventional tape printing device has a keyboard, a display, a printing mechanism, and the like, and is capable of printing inputted characters and symbols on a film-like tape serving as a printing medium. The tape has a width of 12 or 24 mm, for example. Further, various editing functions are added to such conventional tape printers. These functions include a line modification setting function for determining, when performing printing on a tape, line modification such as leftward and rightward justification. This tape printing device is suitable for producing a variety of labels such as a file name label.

The conventional tape printing device is further capable of printing characters and the like on a transparent tape, the printed surface of the transparent tape being covered with a double-sided adhesive tape. Characters printed on a tape in this manner will not pale or fade away from rubbing, because the printed surface is inside the transparent tape. Accordingly, it is very suitable for a label to be portable or attached to an object which constantly contacts other objects.

Turning to a world-wide market, many kinds of currencies are in use all over the world. Especially in Europe, there are a number of countries in a small area and each country uses its own currency. Consequently, the same product is often sold in different countries. In this case, it is necessary to convert a product price into currencies of each country by using an exchange rate and to attach a price tag showing the converted price.

Also in Europe, currencies are integrated into one currency, Euro. After the integration, product prices, which are currently shown in currencies of each country, need to be shown in the integrated currency.

Further, because of the recent trend of global exchange of people, even within one country, those who have various currencies frequently purchase products using various currencies. In this case, also, it is convenient for buyers if products have a plurality of prices in different currencies calculated using the exchange rate.

For such cases, there have been known a variety of calculators capable of converting a price into a desired currency using the exchange rate. However, there have never been a printing device capable of immediately printing a price converted based on a calculation result and making a price tag to be attached to a product and the like.

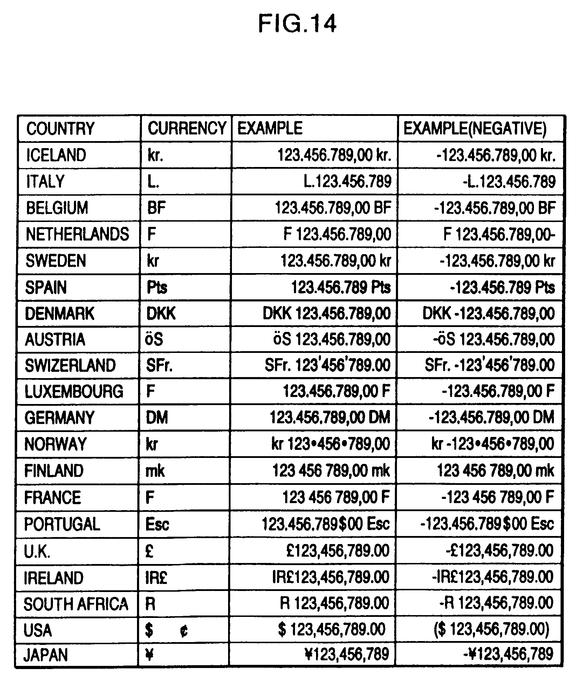

Also, as shown in Fig. 14, amount, currency symbols and a way to put a decimal point and positional notation symbols are different from currencies of each country. For this reason, it is extremely troublesome to display a price with the currencies of other countries.

It is therefore, an object of the present invention to provide a printing device capable of converting an amount or a product price of one currency into an amount or a product price of another currency on a basis of an initially inputted exchange rate and capable of immediately printing on a tape like image carrying medium the converted amount with a style appropriate for the currency to produce a price tag and the like which display the converted amount.

This and other objects of the present invention will be attained by a printing device including input means for inputting data of characters, symbols, and figures, data storing means, for storing the data inputted by the input means, display means for displaying the inputted data, print means for printing the characters, symbols, and figures on a recording medium, and the improvement characterized by conversion rate storing means, calculation means, and control means. The conversion rate storing means is adapted for storing at least one currency and a conversion rate of the at least one currency with respect to a standard currency. The at least one currency and the conversion rate are stored in a related fashion. The calculation means is adapted for calculating, based on the conversion rate stored in the conversion rate storing means, a value in the at least one currency when a standard currency value is inputted in the input means. The control means is adapted for controlling the print means to print on the recording medium the value calculated by the calculation means.

The present invention will be further described hereinafter with reference to the following description of an exemplary embodiment and the accompanying drawings, in which:
Fig. 1 is a perspective view showing a tape printing device according to one embodiment of the present invention;
Fig. 2 is a plan view showing the tape printing device and particularly showing a printing mechanism and a tape cassette;
Fig. 3 is a block diagram showing a control system of the tape printing device according to the embodiment;
Fig. 4 is a block diagram showing a content of a RAM of the tape printing device according to the embodiment;
Fig. 5 is a flowchart showing a tape printing control routine in the tape printing device according to the embodiment;
Fig. 6 is a flowchart showing a currency rate setting process control routine in the tape printing device;
Fig. 7 is a flowchart showing an outline of a currency invalidation setting process control routine in the tape printing device;
Fig. 8 is a flowchart showing a currency calculation process control routine in the tape printing device;
Fig. 9 is a flowchart showing a pause symbol registration process control routine in the tape printing device;
Fig. 10 is a flowchart showing a tape length setting process control routine in the tape printing device;
Fig. 11 is a flowchart showing a print process control routine in the tape printing device;
Fig. 12 is an explanatory view showing a currency conversion table stored in a currency conversion table memory in the tape printing device;
Fig. 13 is an explanatory view showing currency symbol data stored in a currency symbol data memory in the tape printing device; and
Fig. 14 is an explanatory view showing display styles of amounts in currencies of each country.

A tape printing device according to one embodiment of the present invention will be described with reference to the drawings.

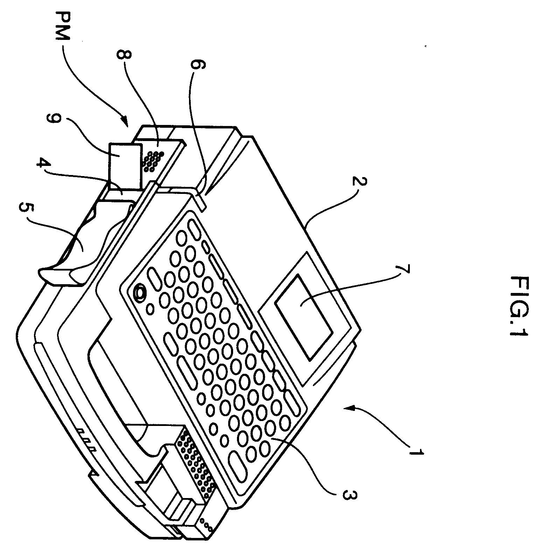

As shown in Fig. 1, a tape printing device 1 has a generally box shaped body frame 2. A keyboard 3 is disposed to a front portion of an upper wall of the body frame 2. The keyboard 3 serves as an input means and includes character keys for inputting alphabet letters, figures, symbols, and the like, a space key, a return key, cursor movement keys for moving a cursor leftward and rightward, a pause symbol registration key for providing a pause symbol registration mode, a tape length setting key for setting a tape length in a print region to be printed in a print tape 9, a currency rate setting key for setting a currency rate setting mode, a currency calculation process key for setting a currency calculation process mode, a currency invalidation setting key for setting a currency invalidation setting mode, an invalidation key for invalidating a currency symbol, a size setting key for setting the size of characters to be printed, an execution key for executing various processes, an end key for commanding ending of various setting processes, a print key for commanding printing, a delete key for deleting data from a memory, and a power source key for turning on and off a power source. A liquid crystal display 7 is provided as a display means to a rear portion of the keyboard 3. The liquid crystal display 7 displays inputted characters and set modes as needed.

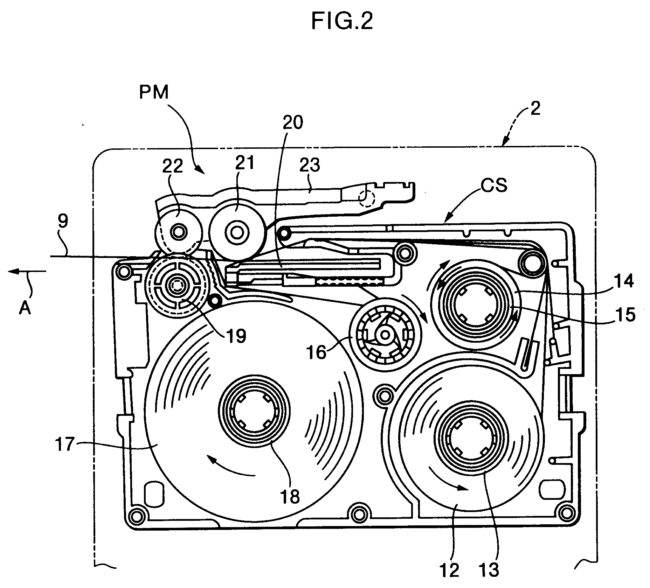

A printing mechanism PM is provided in the tape printing device 1, and a cover frame 8 is provided at a side wall of the body frame 2 and spanning to the rear surface thereof. The cover frame 8 enables attachment and detachment of a tape cassette CS (Fig. 2) to be mounted in the printing mechanism PM. The side wall is formed with a tape discharge port 4, and a cutter lever 5 is pivotally movably supported to the side wall of the body frame 2. The cutter lever 5 has a cutter (not shown) for manually cutting a print tape 9 taken out of the tape discharge port 4. A print lamp 6 is provided at the upper wall for indicating that printing is being performed.

The tape cassette CS and the printing mechanism PM are best shown in Fig. 2. The tape cassette CS has a rectangular-shape and is detachably mounted in the printing mechanism PM. The tape cassette CS is provided with a tape spool 13 wounded with a tape 12, such as a transparent laminate film tape 12 serving as a recording medium, a ribbon supply spool 15 wounded with a print ribbon 14, a take-up spool 16 for taking up the print ribbon 14, a supply spool 18 wounded with a double-sided adhesive tape 17, and an adhering roller 19 for adhering together the laminate film tape 12 and the double-sided adhesive tape 17. All the above-described spools and the roller are rotatably provided to the tape cassette CS. The double-sided adhesive tape 17 has a width the same as the laminate film tape 12 and is attached to its outer peripheral side with an exfoliation sheet. Further, the tape 12 is formed from a base tape. Both sides of the base tape are formed with an adhesive layer and one side of the base tape is attached with the exfoliation sheet.

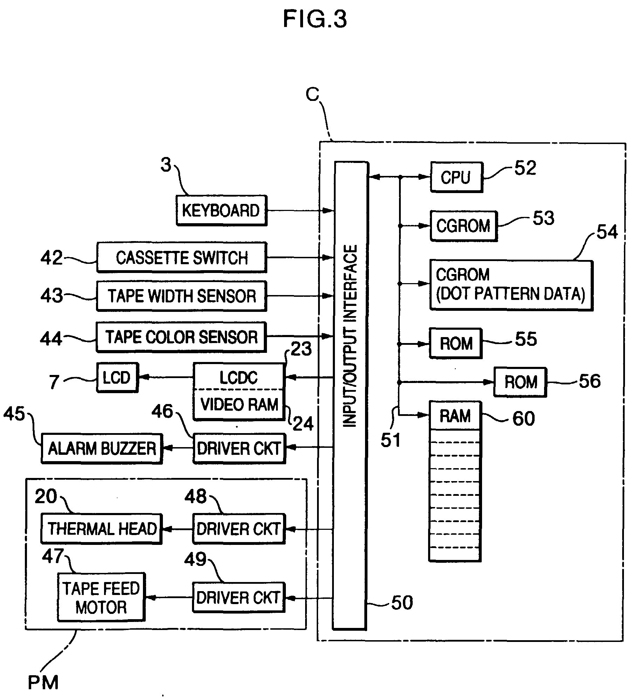

Regarding the printing mechanism PM, a thermal head 20 is provided in an upright posture to a position where the laminate film tape 12 and the print ribbon 14 overlap. The thermal head 20 is provided with a plurality of heat emitting elements vertically arrayed in line. A platen roller 21 is provided for pressing the laminate film tape 12 and the print ribbon 14 onto the thermal head 20. A feed roller 22 is provided to produce the print tape 9 by pressing the laminate film tape 12 and the double-sided adhesive tape 17 onto the adhering roller 19. The platen roller 21 and the feed roller 22 are rotatably supported by a support body 23 which is pivotally movably attached to the body frame 2. A tape feed motor 47 (Fig. 3) is drivingly connected to the adhering roller 19 and the tape-up spool 16.

With the arrangement, upon rotation of the tape feed motor 47 in a predetermined direction, the adhering roller 19 and the take-up spool 16 are synchronously rotated in a predetermined direction. At the same time, electrical current is supplied to the heat emitting elements, so that characters and symbols are formed on the laminate film tape 12 with a dot line basis. Further, the laminate film tape 12 is adhered to the double-sided adhesive tape 17 to form the print tape 9, which is fed in a tape feed direction A and is discharged out of the body frame 2 as shown in Figs. 1 and 2. The printing mechanism PM per se is described in detail in Japanese Patent Application Publication (Kokai) HEI-2-106555. By moving a front free end portion of the cutter lever 5 in a direction away from the side wall of the body frame 2, the cutter(not shown) moves toward and cuts the print tape 9 sent out of the body frame 2.

Various kinds (for example, five kinds) of tapes with different widths are available as the print tape 9 taken out of the tape cassette CS. Each tape has a width of 6 mm, 9 mm, 12 mm, 18 mm, or 24 mm. Further, a plurality of types of tape cassettes CS are available for each tape width. A color of the base tape forming the double-sided tape 17 and an ink color of the print ribbon 14 are selected from "black", "red", "blue", "yellow", "white", etc. The color of the base tape is a base color of the double-sided tape 17 and the color will be simply referred to as a color of the double-sided tape 17, hereinafter. The plurality of types of tape cassettes CS are prepared by freely combining a color of the double-sided tape 17 and an ink color of the print ribbon 14.

A plurality of protrusions protrude from a bottom wall portion of the tape cassette CS. The protrusions are indicative of a tape width of five different kinds of tapes and a combination of color of double-sided tape 17 and the print ribbon 14. A tape width sensor 43 and a tape color sensor 44 are provided to the body frame 2 (see Fig. 3). The tape width sensor 43 is adapted for detecting a tape width based on a protruding fashion of the protrusions. The tape color sensor 44 is adapted for detecting a combined color of double-sided tape 17 and the print ribbon 14. Further, a cassette switch 42 is also provided to the body frame 2 (see Fig. 3) for detecting whether a tape cassette CS selected from the plurality of tape cassettes CS is mounted in the body frame 2.

As shown in Fig. 3, a control system C of the tape printing device 1 includes an input/output interface 50 which is connected to the keyboard 3, the cassette switch 42, the tape width sensor 43, the tape color sensor 44, a display controller (LCDC) 23 having a video RAM 24 for outputting display data to the liquid crystal display (LCD) 7, a driver circuit 46 for an alarm buzzer 45, a driver circuit 48 for driving the thermal head 20, and a driver circuit 49 for driving the tape feed motor 47.

The control device C also includes a CPU 52, CGROMs 53 and 54, ROMs 55 and 56, and a RAM 60, those being connected to the input/output interface 50 via a data bus 51. The CGROM 53 stores therein dot pattern data corresponding to code data for displaying numerals, alphabet letters, and symbols. The CGROM (dot pattern data memory) 54 stores therein dot pattern data corresponding to code data for printing characters and the like. The dot pattern data include various type faces such as Gothic, Italic, and the like, and each type face has seven print character sizes (dot sizes of 16, 24, 32, 48, 64, 96, and 128). The various type faces and the size are all stored in the CGROM 54 for printing.

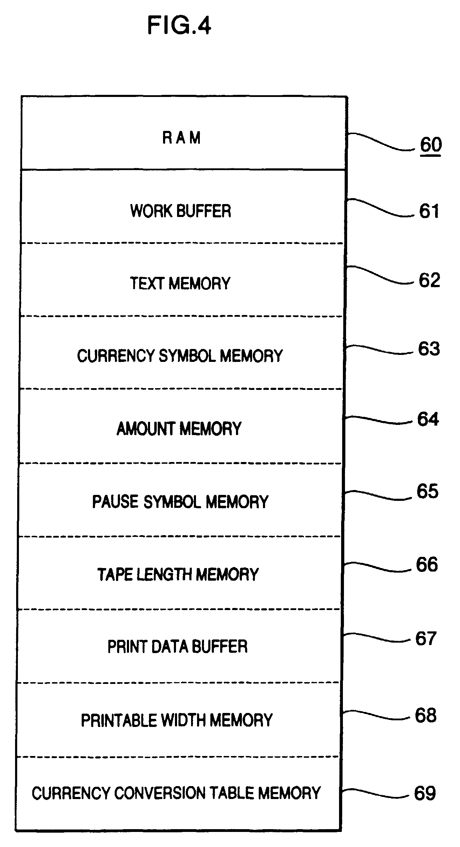

The ROM 55 stores a variety of control programs including a display drive control program for controlling the display controller 23 in correspondence with code data for characters, such as letters, figures, and symbols, those inputted from the keyboard 3, a print drive control program for retrieving one data after another stored in a print data buffer 67 of the RAM 60 (Fig. 4) and driving the thermal head 20 or the tape feed motor 47, and a control program for tape printing control to be described later.

The ROM 55 also prestores, in terms of the number of dots, printable width data corresponding to each of five different tape widths of print tape 9. The ROM 56 serves as a currency symbol data memory and stores currency symbols corresponding to currencies of each country.

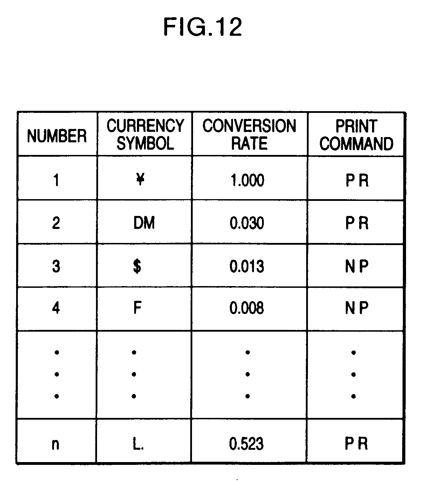

As shown in Fig. 4, the RAM 60 has a work buffer 61, a text memory 62, a currency symbol memory 63, an amount memory 64, a pause symbol memory 65, a tape length memory 66, the print data buffer 67, a printable width memory 68, and a currency conversion table memory 69. The work buffer 61 of the RAM 60 temporarily stores data inputted from the keyboard 3, calculation results, and the like. The text memory 62 stores data which has undergone various processes in the work buffer 61, and the stored data in the text memory 62 are used for ultimate printing. The currency symbol memory 63 stores currency symbol data affixed with a determination result of whether or not a currency symbol is valid, the currency symbol data having been retrieved from the ROM 56. The amount memory 64 stores an amount of an inputted standard currency. The pause symbol memory 65 stores therein an inputted pause symbol. The tape length memory 66 stores set tape length data SL in terms of the number of dots. The print data buffer 67 has a memory capacity consisting of 128 bits (16 bits) in a vertical direction and about 50 characters' worth of predetermined bits in a horizontal direction. The print data buffer 67 stores, as print data, dot image data for printing documents including characters and symbols. The printable width memory 68 stores printable width data TW corresponding to a tape width of the tape cassette CS mounted in the tape printing device 1. As shown in Fig. 12, the currency conversion table memory 69 is provided with a currency conversion table. The currency conversion table stores an inputted currency symbol and a conversion rate of the inputted currency with respect to a standard currency. The inputted currency symbol and its conversion rate are stored after added with a number based on inputted order.

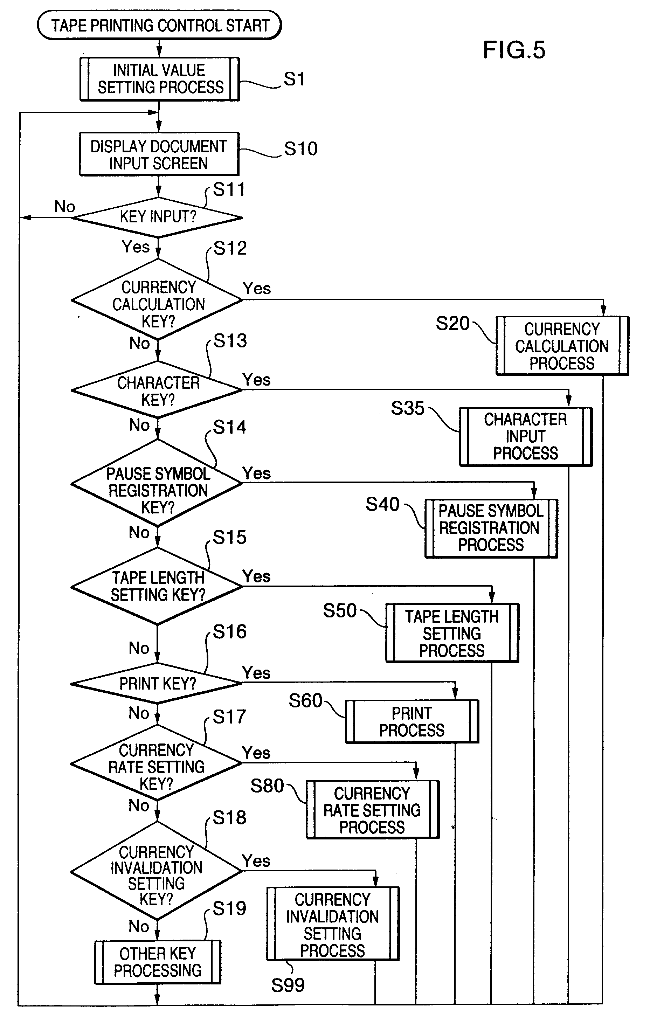

Next, a tape printing control routine performed in the above-described tape printing device 1 will be described with reference to a flowcharts of Figs. 5 through 11. It should be noted that Si (i = 1, 10, 11, 12 ...) in the drawings represents each step.

When a power source is applied by operating the power source key, the tape printing control routine shown in Fig. 5 is executed. First, each of memories 61, 62, and 64 through 68 of the RAM 60 are cleared and an initial setting process such as setting of a document input mode is performed in S1. Then in S10, a document input screen is displayed on the LCD 7. Incidentally, currency data and its conversion rate data those inputted in a previous process remain in the currency conversion table memory 69, and it is possible to use this currency conversion table for a currency calculation process. Also, the currency symbol memory 63 stores data for a currency symbol and data for indicating whether or not the currency symbol is valid.

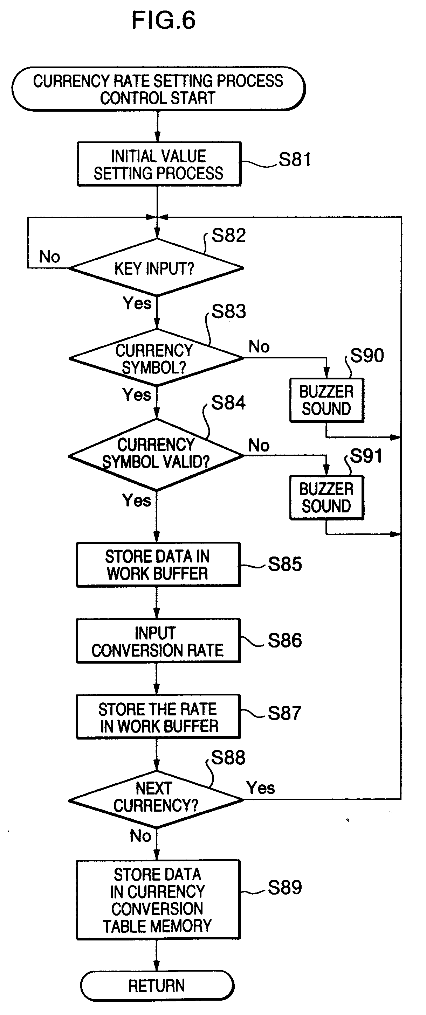

Next, when the currency calculation process key is not operated but printable keys, such as a space key and character keys including alphabet letters, figures, symbols, are operated (S11:YES, S12:NO, S13:YES), a character input process is performed in S35. In the character input process (S35), code data corresponding to the above-described printable keys is inputted and stored in the text memory 62. Then, display process control is performed to display characters and the like on the LCD 7. Next, when the currency calculation process key and the like are not operated but a currency rate setting key is operated (S11:YES, S12∼16:NO, S17:;YES), currency rate setting process control, shown in Fig. 6, is performed in S80. The steps S14 through S16 will be described later. When the currency rate setting key is operated (S17:YES), the currency rate setting process control (S80) shown in Fig. 6 will be started. First, an initial setting process is executed in which the currency conversion table memory 69 is cleared in S81 and a message reading "Currency symbol?" is displayed on the LCD 7.

Next, when key inputs are performed (S82:YES), inputted characters and symbols are temporarily stored in the work buffer 61. Then, in S83, the inputted characters and symbols are compared with currency symbols stored in the currency symbol memory 63. If they match (S83:YES), consecutively in S84, it is determined whether or not the inputted currency symbol is valid. The currency symbols stored in the currency symbol memory 63 and used in this determination, and marks for indicating validation or invalidation of currency symbols will be described later.

In the above-described process, when the inputted data is not a currency symbol (S83:NO), a buzzer is sounded in S90 and the routine returns back to the key input mode (S82). When the inputted data is a currency symbol but is not valid (S83:YES, S84:NO), a buzzer is sounded in S91 and the routine returns back to the key input mode (S82). In S84, when the inputted currency symbol data is valid (S84:YES), the inputted data is stored in the work buffer 61 together with a consecutively inputted conversion rate with respect to a standard currency in S85 through S87.

Next, a message reading "Next currency?" is displayed on the LCD 7. When the execution key is operated (S88:YES), the program returns to S82 and the same process is repeated. After the repetition, when the end key is operated (S88:NO), the inputted currency symbols and their conversion rates are transmitted to the currency conversion table memory 69 in order of being inputted to the work buffer 61 and stored in the table memory 69 after added with a number given in inputted order as shown in Fig. 12. This ends the currency rate setting process (S89) and the program proceeds to S10 of Fig. 5. Thus, in S89, a plurality of currency symbols and their conversion rates with respect to the standard currency are stored.

In the above-described process, it is possible to input one set or more than one sets of a currency symbol and its conversion rate. When a print process, to be described later, is performed for the inputted conversion rates, amounts in the inputted currencies will be printed on a tape. Accordingly, by inputting an amount in a standard currency, an amount in the desired currency can be calculated based on a desired currency and its conversion rate in a currency conversion table stored in the currency conversion table memory 69, and the calculation result can be printed on a tape. Further, by creating a conversion table by inputting the desired number of currency symbols and their conversion rates, a plurality of amounts in the plurality of currencies can be printed on one tape.

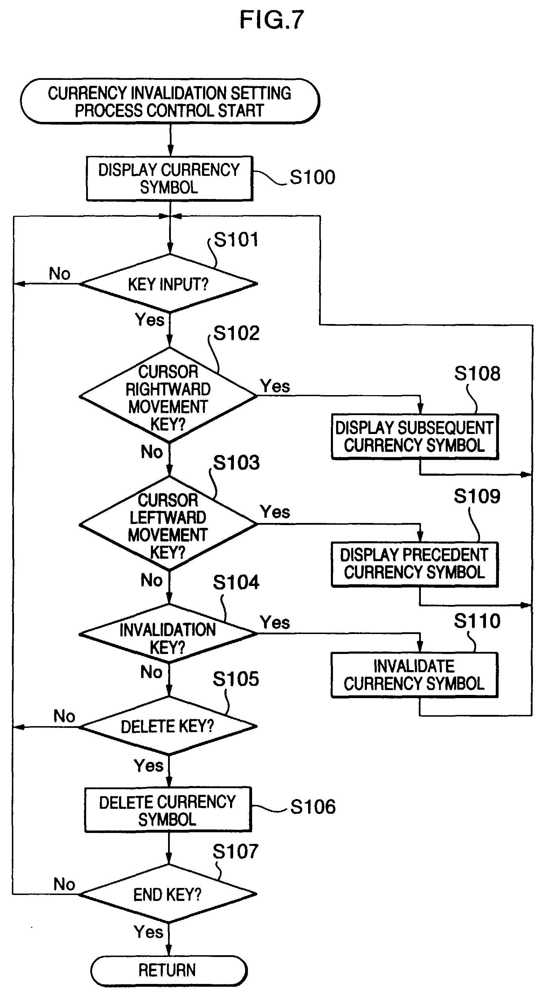

The above-described currency rate setting process control includes the step for determining whether or not a currency symbol is valid. This step is used for checking purpose when a currency becomes invalidated by the European currency integration or the like. When the currency invalidation setting key is operated (S18:YES), the currency invalidation setting process control shown in S99 of Fig. 7 is executed, thereby storing in the currency symbol memory 63 currency symbol data and data as to whether or not the currency symbol is valid.

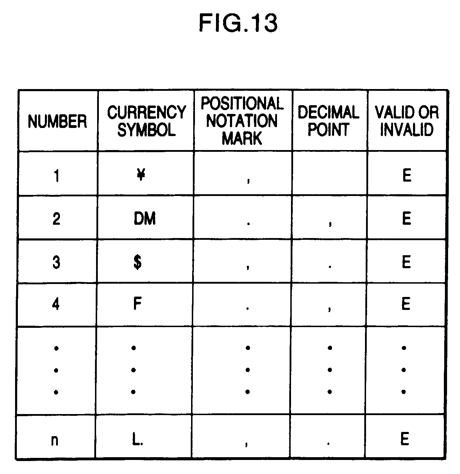

The currency invalidation setting mode is provided by operating the currency invalidation setting key (S18:YES). In the currency invalidation setting process control shown in Fig. 7, the LCD 7 displays a first currency symbol retrieved to the work buffer 61 from currency symbol data stored in the ROM 56 (S100). As shown in Fig. 13, the currency symbol data includes a currency symbol, a positional notation mark, a decimal point, a number given to each currency symbol, and a mark "E", for example, indicating that a currency symbol is valid.

When the cursor rightward movement key is operated (S101, 102:YES), a second currency symbol is displayed and the program returns to S101. That is to say, every time the cursor rightward movement key is operated, a number gets bigger and a currency symbol corresponding to a currency symbol of a subsequent number is displayed (S108). On the other hand, when the cursor leftward movement key is operated (S101:YES, 102:NO, S103:YES), a number gets smaller and a currency symbol of a precedent number is displayed (S109). After a number reached the biggest or the smallest, a currency on display does not change and the same currency remains displayed.

When the invalidation key is operated for the displayed currency symbol (S104:YES), instead of a mark indicating that the currency symbol is valid, a mark (N, for example) indicating that the currency symbol is invalid is added in S110. When the delete key is operated for the displayed currency symbol (S104:NO, S105:YES), a delete process is performed and the currency is deleted from the currency symbol memory 63 (S106).

This currency invalidation setting process control ends when the end key is operated (S107:YES). In the above-described process, currency symbol data stored in the work buffer 61 is transmitted to the currency symbol memory 63. If a user does not wish to print an amount in a standard currency, the standard currency can be invalidated in the above steps S104 and S110. The currency symbol memory 63 will not be cleared unless the currency determination key or the currency invalidation setting key is operated. Although not shown in the drawings, when a currency symbol registration mode is set by operating the currency symbol registration key and characters and symbols are inputted by operating the character keys, the inputted characters and the like can be stored in the RAM 60 as new currency symbols, decimal points and positional notation marks.

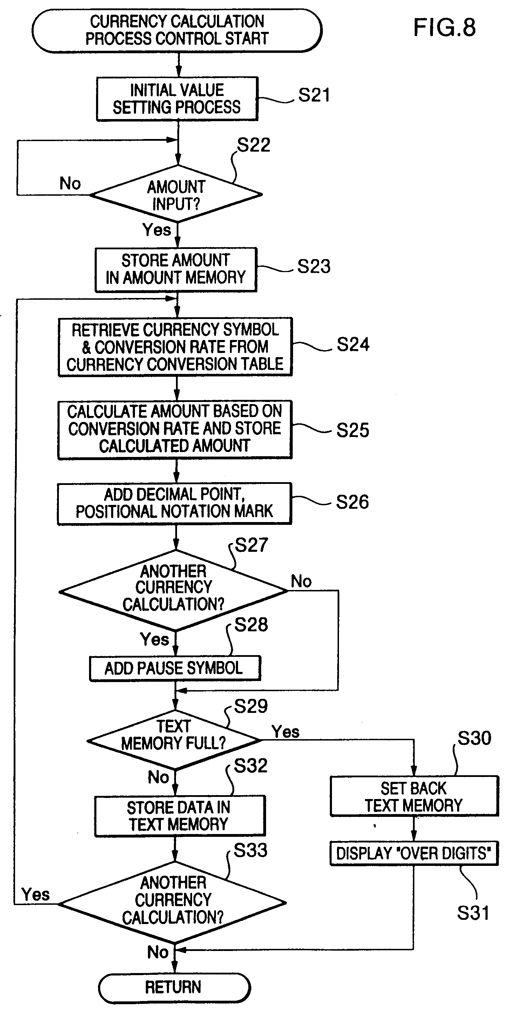

Next, currency calculation process control performed in S20 will be described. While the document input screen is displayed (S10), the currency calculation process control is executed in S20 (see Fig. 8) when a currency calculation process key is operated (S11:YES, S12:YES).

First, an initial value setting process including clearance of the work buffer 61 is performed in S21 and a message reading "Amount?" is displayed on the LCD 7. When an amount in a standard currency is inputted and the execution key is operated (S22:YES), an amount input process is ended and the inputted amount is stored in the amount memory 64 (S23).

Next in S24, currency symbols and conversion rates are retrieved consecutively from the currency conversion table memory 69. Then, multiplication of the amount stored in the amount memory 64 and the retrieved conversion rate are performed, and the calculation result and the currency symbol are first stored in the work buffer 61 in S25. Usually, decimals are round off at the third decimal place, so that up to the second decimal place are stored as a calculation result. If a conversion rate is on the premise of dividing the amount by the conversion rate for converting the amount into another currency, and if such conversion rate is inputted, a process for obtaining a reciprocal of the inputted conversion rate is performed, and the reciprocal can be stored as a conversion rate in the currency conversion table memory 69.

Next, a process for adding to the calculation result a currency symbol, a decimal point, positional notation mark, and spaces for pauses or pause symbols ("/", ".", for example) is automatically performed in S26. In this case, predetermined pause symbols and the like are added.

This process is performed using currency symbol data (shown in Fig. 13) stored in the ROM 56. The resultant amount is stored in the text memory 62 after added with a currency symbol and its corresponding decimal point and positional notation mark stored in the ROM 56. A standard currency and all resultant amounts go through this process one after another before being stored in the text memory 62. Some currencies, such as Japanese currency, do not have decimals. For these currencies, an amount without a decimal point and without decimal fraction is stored in the text memory 62.

Next in S27, based on data in the currency conversion table in the currency conversion table memory 69, it is determined whether or not another currency calculation should be performed. If there is a currency for which currency calculation needs to be performed (S27:YES), a pause symbol, such as "[ ]", a space, and "/" is added in S28 if pause symbols are stored in the pause symbols memory 65. On the other hand, if the pause symbols have not been stored in the pause symbols memory 65, the routine proceeds into S29 without adding the pause symbol. If there is not a currency for which currency calculation needs to be performed (S27:NO), the routine jumps into S29 without executing S28.

When storing the data in the text memory 62, it is determined whether or not the text memory 62 is capable of storing the data (S29). Data to be stored in the text memory 62 is limited to 50 digits, for example. Therefore, when a description displayed after the above-described processes has more digits than the limitation, an overflow occurs (S29:YES). Then, the text memory 62 is set back to a condition before the process started (S30), and a message reading "The displayed digits has too many digits" is displayed on the LCD 7 in S31 and this control is ended.

On the other hand, if a description displayed after the above-described processes has fewer digits than the limitation (S29:NO), the data is stored in the text memory 62 in S32. Then in S33, based on data in the currency conversion table in the currency conversion table memory 69, it is determined whether or not there is still another currency for which currency calculation needs to be performed. If this is the case (S33:YES), the routine returns to S24 and the same processes are performed, that is, the calculation result is stored in the text memory 62 after being temporarily stored in the work buffer 61. On the other hand, if it is determined that no further currency calculation is necessary (S33:NO), the currency calculation process is ended and the program proceeds to S10 in Fig. 5.

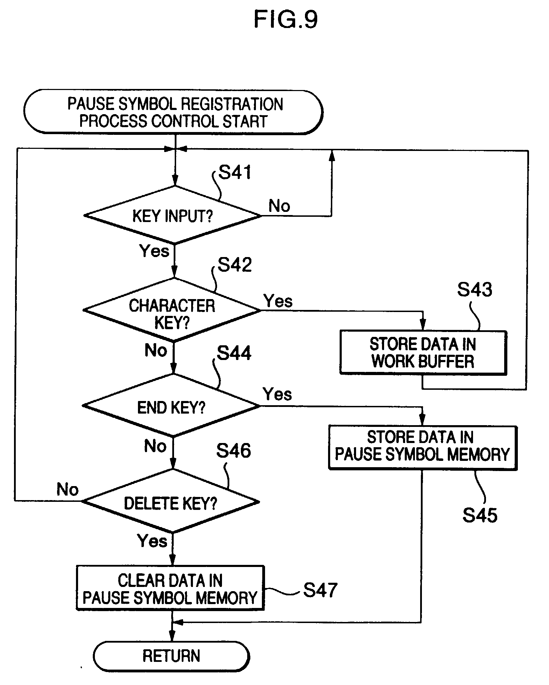

Next, a process for registering the pause symbol in the pause symbol memory 65 of the RAM 60 will be described with reference to Figs. 5 and 9. When the pause symbol registration key is operated (S14:YES), pause symbol registration process control is started. First, a determination is made as to whether or not the key inputting operation has performed (S41). If input of the character keys such as "/", ".", ":", "*", "X", and the space key is performed (S41:YES, S42:YES), the inputted data is stored in the work buffer 61 (S43), and the routine returns to S41. If the end key is operated (S41YES, S42:NO, S43:YES), data stored in the work buffer 61 is transmitted and stored in the pause symbol memory 65 (S45), and the routine returns to S10. On the other hand, if the delete key is operated (S41:YES, S42:NO, S44:NO, S46:YES), data stored in the pause symbol memory 65 is cleared (S47), and the routine goes back to S10.

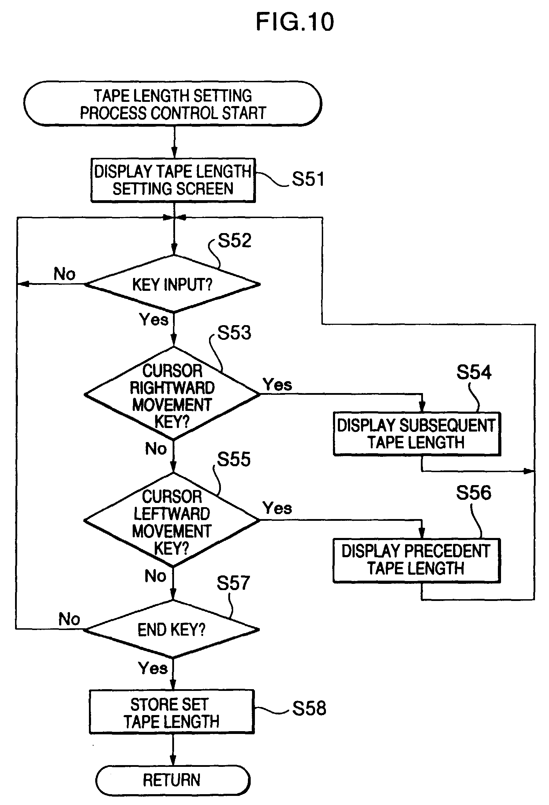

Next, a tape length setting process control performed in S50 will be described with reference to Figs. 5 and 10. When the tape length setting key is operated (S15:YES), the mode is turned into a tape length setting process mode and the tape length setting process control (see S50 in Fig. 10) is executed for setting a tape length in a print region to be printed in the print tape 9.

When this control starts, a tape length setting screen showing that a set tape length is a minimum length of 2cm, for example, is displayed on the display 7 (S51). Afterward, when the cursor rightward movement key is operated (S52:YES, S53:YES), a subsequent set tape length is displayed in S54 and the program returns to S52. For example, each time the cursor rightward movement key is operated, a set tape length is displayed while increasing by 1cm in order of "2cm", "3cm", "4cm", "5cm ... "20cm". At this time, "Auto" or "None" is displayed after "20cm", for example. By selecting this, the tape length setting process mode is turned off. On the other hand, when the cursor leftward movement key is operated (S52:YES, S53:NO, S55:YES), a set tape length is displayed in the reverse order while decreasing by 1cm (S56) and the program returns to S52.

Next, when the end key is operated upon completion of a tape length setting (S52:YES, S53:NO, S55:NO, S57:YES), the number of dots corresponding to the set tape length is stored as set tape length data SL in the tape length memory 66 in S58. This ends the tape length setting process control and the program proceeds to S10.

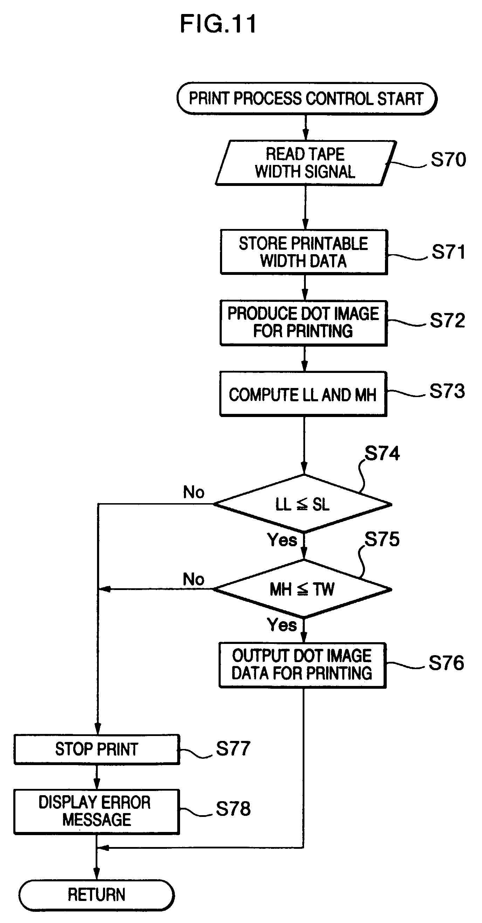

Next, a print process control will be described with reference to Figs. 5 and 11. In this print process, determination is made as to whether or not data for an amount and the like to be printed and stored in the text memory 62 can fit in the set tape length, if the above-described length setting process has already been performed.

More specifically, in the tape printing control, when the print key is operated (S11:YES, S13-S15:NO, S16:YES), the print process control (S60) shown in Fig. 11 will be started. First, a tape width signal from the tape width sensor 43 is read in S70. Then, in S71, printable width data TW (the number of dots) corresponding to the tape width signal is retrieved from the ROM 55 and stored in the printable width memory 68.

Next in S72, dot image data for printing concerning an amount or normal characters and the like added to the amount (hereinafter simply referred to as "text data"), those stored in the text memory 62 are produced and stored in the print data buffer 67. Then in S73, based on the dot image data stored in the print data buffer 67, the number of dots data LL regarding the length of the text data and the number of dots MH regarding a maximum character height of the text data are determined. Then, it is determined whether or not the dot image can be within a print region defined by the set tape length data (lengthwise length data) SL and the printable width data (widthwise length data) TW.

More specifically, if the text data length data LL is smaller than the set tape length data SL (S74:YES) and the maximum character height data MH of the text data is smaller than the printable width data TW (S75:YES), the text data will fit in the print region. Consequently in S76, dot image data in the print data buffer 67 is outputted to the printing mechanism PM and the text data, for example, "1.500,00DM/$1,000.00" is printed on the print tape 9 (S76).

On the other hand, based on the dot image data stored in the print data buffer 67, if the text data length data LL is greater than the set tape length data SL, that is, if the amount display train does not fit in the print region (S74:NO, S75:NO), the print process is stopped in S77 and a message reading "Exceeds the set length" is displayed on the LCD 7 (S78). Thus, it is possible to prevent the amount display train greater than the preset tape length from being printed by presetting the tape length. Then, this control is ended and the program proceeds to S10 of the above-described tape printing control process (main routine). In this case, print can be performed by resetting a tape length. In the above-described print process, any characters and symbols aligned horizontally or vertically can be selected as dot image data for printing.

As described above, according to the illustrated embodiment, a value (product price) in one currency can be converted to a value (product price) in another currency based on a conversion rate of the inputted currency with respect to a standard currency, and the converted value with an appropriate display style can be immediately printed on a recording medium, such as a tape, thereby easily producing a price tag and the like. In this way, by selecting a desired currency symbol and conversion rate, an amount in the desired currency can be immediately printed on the tape.

Further, it is possible to covert a value in one currency into values in a plurality of other currencies based on conversion rates of a plurality of inputted currencies with respect to the standard currency, and those values with display styles appropriate for the currencies can be immediately printed on a recording medium, such as a tape, thereby producing a price tag and the like. Therefore, for those who use the standard currency and those who use other currencies, it is easy to judge a value of a product and the like and to purchase it.

While the invention has been described in detail and with reference to the specific embodiment thereof, it would be apparent to those skilled in the art that various changes and modification may be made therein without departing from the scope of appended claims. For example, in the depicted embodiment, the keyboard 3 is provided as the input means. However, a scanner or other transmission devices can be used as the input means.

Further, the recording medium is not limited to the above described tape medium, but can be any kind of medium as long as it is suitable for producing a price tag and the like.

Further, in the depicted embodiment, separate ROMS 55 and 56 are provided. However, the ROM 55 and the ROM 56 can be configured from a single ROM.

Further, in the depicted embodiment, the currency rate setting key is provided for setting currency rate in S17 and S80. However, the currency rate setting key can be dispensed with. For example, the currency rate setting mode can be set by pressing the execution key after inputting any character train indicating the currency rate.

Further, in the currency rate setting process control shown in Fig. 6, the a plurality of currency symbols and their conversion rates are stored in the currency conversion table memory 69 after repeating the steps S82 through S88. Instead, each time a currency and its conversion rate are inputted, they can be transmitted from the work buffer 61 to the currency conversion table memory 69. Also, a currency symbol for a standard currency and its conversion rate of "1" can be inputted at first.

Further, in the above described step S82, the currency symbol is inputted by operating keys. However, some currency symbols are difficult to be inputted by normal key operations. Therefore, the ROM 56 can store currency symbols data, and a desired currency symbol can be inputted by retrieving currency symbols data stored in the ROM 56, displaying them in a chart, and selecting the desired currency symbol by operating a selection key.

Further, the inputted characters and the like can be supplemented as new currency symbols and positional notation marks, when a space is displayed on the LCD 7 by operating the cursor rightward movement key and characters and symbols are inputted by operating the character keys.

Further, in the step S26, all of a currency symbol, a decimal point, and positional notation marks do not have to be added. Some of them can be selected by operating a predetermined key for setting a proper mode and the desired symbol can be added as needed. For example, if a currency symbol and the amount are to be simply shown, a currency symbol addition mode will be set by operating a predetermined key. Thus, only the currency symbol can be added.

Further, in the above-described currency calculation process control (S20, Fig. 8), an amount is inputted in a standard currency having a conversion rate of 1.00. However, by designating a specific currency, it is possible to set the designated currency as a standard currency and to input an amount in the designated currency. In the latter case, by designating the specific currency, a process is performed for recalculating the currency conversion table stored in the currency conversion table memory 69 so as to change the conversion rate of the designated currency to 1.00. Then, based on the recalculated currency conversion table, the process control from S21 to S33 is performed.

Further, in the pause symbol registration process control shown in Fig. 9, a plurality of pause symbols can be stored in the pause symbol memory 65 as a group of pause symbols. Furthermore, a plurality of groups of pause symbols can also be stored in the pause symbol memory 65. In the latter case, prior to printing operation, a desired one of the groups is selected and a desired one of the pause symbols can be selected from the selected group.

Further, the above described tape length setting process control (Fig. 10) can incorporate a character distance equalization process control for printing characters with an equal distance in a manner described in Japanese Patent Application Publication (Kokai) No. HEI-4-18508.

Further, the step S13 and S35 can be dispensed with. Instead, a character input mode can be a default mode over the currency calculation mode, pause symbol registration mode, tape length setting mode, currency rate setting mode, and currency invalidation setting mode. With this arrangement, if the printable keys such as the alphabet key, figure key, symbol key and space key is operated (S11:YES, S12:NO, S14-S18:NO), a step S19 (other key processing) performs the character input process control like the step S35, so that code data corresponding to the input character data or space data is stored in the text memory 62 and the input character or space is displayed on LCD 7 in the step S19.

Further, in the above-described print process control (Fig. 11), it is preferred to provide an additional step in which determination is made as to whether or not the standard currency should also be printed together.

Furthermore, in the above described print process control (Fig.11), it is preferable to enable selection of currencies the user wishes to print. In the latter case, a print selection mode is set by operating a currency print selection key, and currency symbols stored in the currency conversion table are displayed on the LCD 7 one after another. When letters "PR" for commanding print are inputted while a desired currency is displayed, this letters "PR" are stored in the currency conversion table memory 69. On the other hand, when letters "NP", which is indicative of unwanted printing, are inputted, this letters "NP" are stored in the currency conversion table memory 69 (see Fig. 12, rightmost column). Also, by inputting a number, the print order of currencies can be selected. Then, by operating the print key, with respect to a currency symbol for which print has been commanded, it is determined whether or not data in the text memory 62 fits in the set tape length, and then, printing is performed.

## Claims

1. A printing device comprising:
input means (3) for inputting data of characters, symbols, and figures;
data storing means (61) for storing the data inputted by the input means;
display means (7) for displaying the inputted data;
print means (PM) for printing the characters, symbols, and figures on a recording medium (9); characterized by
conversion rate storing means (69, Fig.12) for storing at least one currency and a conversion rate of the at least one currency with respect to a standard currency, the at least one currency and the conversion rate being stored in a related fashion;
calculation means (S21-S25,Fig.8) for calculating, based on the conversion rate stored in the conversion rate storing means, a value in the at least one currency when a standard currency value is inputted in the input means; and
control means (52,54,55,67,S60,Fig.11) for controlling the print means to print on the recording medium the value calculated by the calculation means.

2. The printing device according to claim 1, wherein the conversion rate storing means (69,Fig.12) stores at least two currencies and conversion rates of the at least two currencies with respect to the standard currency, each currency and each conversion rate being stored in a related fashion;
and wherein the calculation means calculates, based on the conversion rates stored in the conversion rate storing means, respective values (S24-S33) in the at least two currencies when a standard currency value is inputted in the input means; and,
wherein the control means controls the print means to print the respective values calculated by the calculation means on an identical recording medium, preferably the control means controls the print means to print the value inputted in the standard currency together with the respectively calculated values on the identical recording medium.

3. The printing device according to any preceding claims further comprising: first addition means (56,63,S24) for adding a currency symbol with respect to the calculated values,
and wherein the control means controls the print means to print the currency symbol as well as the calculated value on the identical recording medium.

4. The printing device according to one of claims 1 to 3, further comprising:
symbol storing means (56,62,Fig.13) for storing at least one currency, a decimal point and positional notation symbols appropriate for the at least one currency, the decimal point and the positional notation symbols being stored in correspondence with the at least one currency; and
second adding means (S26) for adding to the value calculated by the calculation means the decimal point and the positional notation symbols in association with the at least one currency based on data stored in the symbol storing means;
and wherein the control means controls the print means to print on a recording medium the value calculated by the calculation means together with the decimal point and positional notation symbols added by the second adding means, preferably the conversion rate storing means (69,Fig. 12) stores at least two currencies and conversion rates of the at least two currencies with respect to the standard currency, each currency and each conversion rate being stored in a related fashion;
and wherein the symbol storing means stores the each currency, a decimal point and positional notation symbols appropriate for each currency, the decimal point and the positional notation symbols being stored in correspondence with each currency;
and wherein the calculation means calculates, based on the conversion rates stored in the conversion rate storing means, respective values in the at least two currencies when a standard currency value is inputted in the input means;
and wherein the second adding means adds to each value calculated by the calculation means the decimal point and the positional notation symbols in association with each currency based on data stored in the symbol storing means;
and wherein the control means controls the print means to print on a recording medium each value calculated by the calculation means together with the decimal point and positional notation symbols added by the second adding means with respect to the each value.

5. The printing device according to any one of claims 1 to 4, wherein the control means controls the print means to print the inputted standard currency value together with the calculated value on an identical recording medium.

6. The printing device according to any one of claims 1, 2 and 4 , further comprising: currency symbol addition means (56,63,S24) for adding a currency symbol to the value calculated by the calculation means;
and wherein the control means controls the print means to print the currency symbol as well as the calculated value on the identical recording medium.

7. The printing device according to any one of claims 1 to 6, further comprising: pause symbol adding means (S28) for adding a pause symbol between two currency values;
and wherein the control means adds the pause symbol between the two currency values, and controls the print means to print on the recording medium the currency values and the pause symbol therebetween in a single line basis, preferably the two currency values comprise the value calculated by the calculation means and the standard currency value and/or the conversion rate storing means (69) stores at least two currencies and conversion rates of the at least two currencies with respect to the standard currency, each currency and each conversion rate being stored in a related fashion;
and wherein the calculation means calculates, based on the conversion rates stored in the conversion rate storing means, respective values in the at least two currencies when a standard currency value is inputted in the input means;
and wherein the pause symbol adding means adds the pause symbol between neighboring calculated currency values for separating one calculated currency value from the other calculated currency value;
and wherein the control means controls the print means to print on a recording medium the calculated values and the pause symbol.

8. The printing device according to claim 7, further comprising: setting means (Fig.9,65) for setting at least one pause symbol, the pause symbol adding means adding the at least one pause symbol set by the setting means.

9. The printing device according to any one of claims 1 to 8, further comprising: conversion rate setting means (S80,61,63,69, Fig.6) for setting the conversion rate of the at least one currency, the conversion rate set by the conversion rate setting means being stored in the conversion rate storing means (69), preferably the conversion rate setting means comprises: currency symbol invalidation means (S99,Fig.7) for invalidating a currency symbol input by the input means if the input currency symbol is invalid.

10. The printing device according to any one of claims 1 to 9, wherein the image recording medium comprises a tape medium, and the printing device further comprising: tape length setting means(S50,Fig.10,66) for setting a length of the tape medium.
